# FASCICULE DE BREVET EUROPEEN

(11) **EP 3 267 003 B1**
(45) Date de publication et mention de la délivrance du brevet: **04.03.2020**
(21) Numéro de dépôt: 17179463.9
(22) Date de dépôt: 04.07.2017
(51) Int. Cl.: F01N 3/20

(54) **SYSTÈME DE CHAUFFAGE PASSIF D'UN SYSTÈME SCR**
PASSIVES HEIZSYSTEM EINES SCR-SYSTEMS
PASSIVE HEATING SYSTEM OF AN SCR SYSTEM

(30) Priorité: 05.07.2016 FR 1656406
(43) Date de publication de la demande: 10.01.2018
(73) Titulaire: RENAULT s.a.s., 92100 Boulogne-Billancourt (FR)
(72) Inventeur: MOUNETOU, Christophe, 91510 LARDY (FR)
(74) Mandataire: Rougemont, Bernard

(56) Documents cités:
- EP-A1- 2 565 412
- EP-A2- 2 103 788
- WO-A1-2008/066482
- DE-A1-102006 017 414
- DE-A1-102008 049 685
- DE-A1-102012 107 208
- DE-U1- 20 119 513

## Description

La présente invention concerne un système de chauffage d'un agent réducteur d'un dispositif de dépollution par réduction catalytique sélective SCR (ou « Selective Catalytic Reduction », en anglais) pour véhicule à moteur diesel, à l'aide d'une source de chaleur préexistante.

Les législations sur les émissions polluantes des véhicules automobiles, y compris les poids lourds, prévoient entre autres une diminution des rejets d'oxydes d'azote (NOₓ) dans l'atmosphère. Pour atteindre cet objectif, on connaît un procédé de dépollution par réduction catalytique sélective SCR qui permet la réduction des oxydes d'azote par injection d'un agent réducteur, généralement une solution d'urée, dans la ligne d'échappement. Cette solution, dont la concentration peut être celle de l'eutectique, se décompose par hydrolyse en ammoniac.

Avec le procédé SCR, les dégagements élevés de NOₓ produits dans le moteur lors d'une combustion à rendement optimisé sont traités en sortie de moteur dans un catalyseur. Ce traitement requiert l'utilisation de l'agent de réduction à un niveau de concentration spécifique. La solution est ainsi précisément dosée et injectée dans le flux de gaz d'échappement où elle est hydrolysée avant de convertir l'oxyde d'azote (NOₓ) en azote (N₂) et en eau (H₂0).

Cette technique est notamment utilisée pour satisfaire aux normes européennes d'émissions de rejets polluants, en particulier la norme Euro 6. Elle devient cependant inopérante dès lors que l'agent réducteur gèle après avoir atteint sa température de solidification. Cette limite, par exemple, est de -11°C lorsque l'agent réducteur est une solution aqueuse à presque 70%.

Bien qu'il existe d'autres solutions aqueuses pouvant geler à des températures plus basses, en particulier les mélanges à un autre pourcentage de dilution d'urée et de sel d'ammonium gelant vers -35°C, celles-ci sont plus chères et restent malgré tout soumises au problème du gel.

Une contrainte due à l'utilisation d'un procédé de dépollution SCR est que l'agent réducteur liquide doit être protégé du gel pour fonctionner.

Pour dégeler l'urée, certains dispositifs de dépollution SCR utilisent un système de vidange et de chauffage électrique, doté notamment d'un réservoir d'urée et d'un injecteur d'urée.

Par exemple, le document WO 2013/029950 décrit un système de chauffage d'au moins un composant d'un dispositif de dépollution SCR à urée liquide comprenant des résistances électriques, pilotées par un calculateur au travers d'une stratégie logicielle ou autopilotées par des procédés d'auto-commutation des résistances.

Le document EP 0850791 divulgue un système de chauffage de l'habitacle d'un véhicule automobile à moteur diesel à injection directe au moyen de l'énergie diffusée par le circuit de récupération du carburant excédentaire ou de fuites dans l'injecteur, appelé circuit de retour de carburant.

Le document WO 2013029950 décrit un système d'alimentation comprenant un réservoir de liquide et une conduite d'alimentation de liquide. La conduite comprend une ou plusieurs poches de gaz réparties le long de la conduite pour absorber les dilatations du liquide lors du gel du liquide. D'autres poches de gaz sont réparties dans le réservoir d'urée et dans la pompe d'urée.

Le document FR 2936982 divulgue les avantages d'une injection d'urée dans la ligne d'échappement d'un véhicule à moteur diesel, dans le but de réduire les émissions nocives, et propose de placer le réservoir d'urée près d'un autre réservoir d'additifs, en particulier dans un carter commun. Le document DE 201 19 513 (Purem) décrit une connexion thermo-conductrice entre la ligne d'alimentation en carburant et la ligne d'alimentation en agent réducteur formée par un tube double pourvu de deux canaux s'étendant parallèlement ou pourvu de deux canaux concentriques.

L'invention propose d'utiliser une source de chaleur inexploitée jusqu'à présent et très souvent présente sur les véhicules. Avantageusement, l'invention permet de réduire le nombre de résistances de chauffage pour dégeler l'agent réducteur du dispositif de dépollution SCR.

L'invention assure ainsi avantageusement un gain de consommation, et diminue les rejets en CO₂ dans la mesure où la consommation électrique due aux résistances de chauffage est plus faible.

L'invention porte donc sur un système de chauffage d'un agent réducteur d'un dispositif de dépollution par réduction catalytique sélective pour un véhicule à moteur diesel selon les caractéristiques de la revendication 1.

Selon un mode de réalisation du système de chauffage, l'agent réducteur est une solution aqueuse comprenant de l'urée adaptée pour réduire les émissions d'oxydes d'azote.

Selon un mode de réalisation du système de chauffage, la source de chaleur est une ligne d'échappement.

Par exemple, la ou les sources de chaleur comprennent une résistance électrique.

La ou les résistances électriques peuvent être disposées le long dudit conduit d'acheminement de l'agent réducteur ou dans le réservoir d'agent réducteur.

Selon un mode de réalisation du système de chauffage, la ou les sources de chaleur sont formées par un circuit de refroidissement de moteur.

Selon un mode de réalisation du système de chauffage, au moins une source de chaleur est un circuit d'huile de moteur.

Selon un mode de mise en œuvre du système de chauffage, on utilise l'air chaud soufflé par un groupe moto ventilateur.

D'autres avantages et caractéristiques de l'invention apparaîtront à la lecture de la description détaillée d'un mode de réalisation de l'invention, non limitatif, illustré sur les dessins annexés, dans lesquels :
- La figure 1 est un schéma d'un dispositif de dépollution SCR utilisant une résistance chauffante pour dégeler l'agent réducteur ;
- La figure 2 illustre un conduit comprenant deux cavités imperméables ;
- La figure 3 illustre un conduit comprenant un second conduit comportant une portion adaptée pour la jonction et la séparation des conduits en deux conduits séparés ;
- La figure 4 illustre un conduit disposé partiellement en spirale autour à l'extérieur d'un autre conduit selon l'invention.

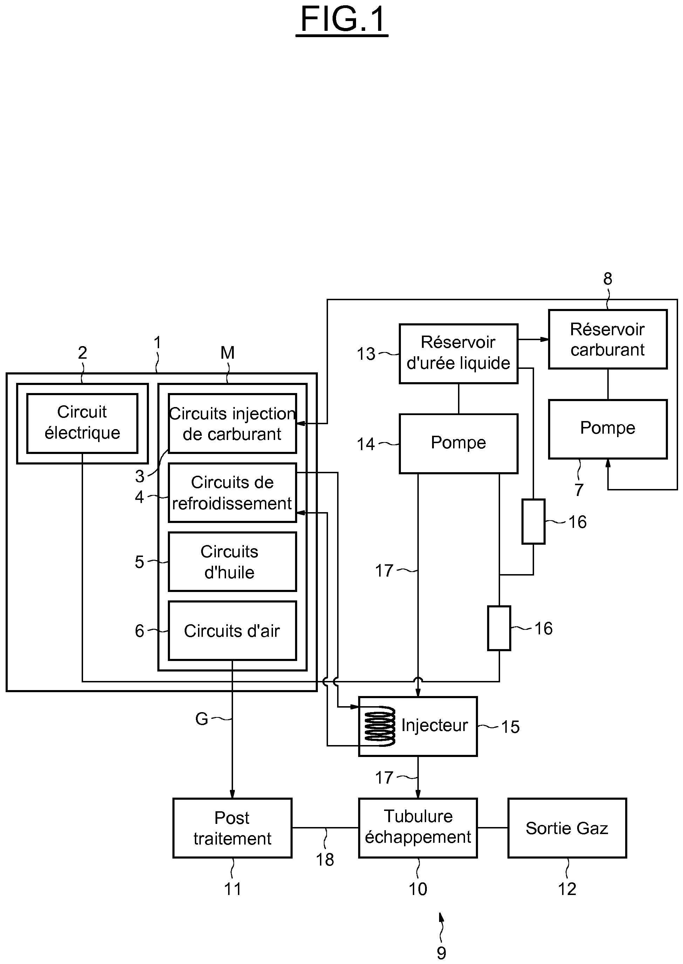

On se réfèrera tout d'abord à la figure 1 qui illustre schématiquement un dispositif de dépollution SCR pour véhicule automobile de type diesel.

Sur cette figure, seule une partie du groupe motopropulseur 1 du véhicule a été représentée, à savoir le circuit électrique d'alimentation 2 et le moteur M, comprenant ses circuits d'injection de carburant 3, ses circuits de refroidissement 4, ses circuits d'alimentation d'huile 5 et ses circuits d'alimentation en air 6.

Les circuits d'injection de carburant 3 sont alimentés en carburant à partir d'une pompe 7 alimentée en énergie électrique par le circuit d'alimentation 2 pour prélever du carburant à partir d'un réservoir 8.

On notera que le groupe motopropulseur est doté d'un circuit de retour de carburant capable de réinjecter dans le réservoir le carburant en excès.

Sur la figure 1, la ligne d'échappement 9 a été schématisée par sa tubulure d'échappement 10, son dispositif de traitement 11 qui reçoit les effluents gazeux G issus du moteur M, et par sa sortie de gaz d'échappement 12.

Le dispositif de dépollution illustré à la figure 1 est un dispositif de dépollution SCR et comporte un réservoir d'urée liquide 13 associé à une pompe 14 apte à injecter de l'urée liquide dans la ligne d'échappement E au moyen d'un injecteur 15.

Comme on le voit, l'injecteur 15 est refroidi par les circuits de refroidissement 4.

Le dispositif de dépollution SCR est également doté d'au moins une source de chaleur adaptée pour chauffer l'agent réducteur injecté dans la ligne d'échappement.

On notera à cet égard que l'agent réducteur du dispositif de dépollution par SCR utilisé dans ce mode de réalisation est l'urée liquide de type AUS 32 standardisée selon la norme ISO 22241. De manière non limitative, l'agent réducteur peut être n'importe quel autre produit liquide adapté à la réduction catalytique sélective, en particulier, pour respecter les normes Euro 6 de réduction des émissions d'oxydes d'azote (NOₓ) pour les moteurs diesel.

La source de chaleur utilisée pour réchauffer l'agent réducteur est de préférence une source préexistante, disponible au sein du groupe motopropulseur et qui dès lors peut être utilisée pour assurer le réchauffement de l'agent réducteur.

Il peut par exemple s'agir d'une résistance électrique 16 qui est disposée entre la pompe 14 d'urée liquide ou le réservoir d'urée liquide 13 et le circuit électrique d'alimentation 2 et qui est disposée en relation d'échange thermique avec une conduite 17 d'injection d'agent réducteur dans la tubulure d'échappement 10.

Il peut également s'agir du circuit de retour de carburant qui comprend un conduit d'acheminement de retour de carburant excédentaire des circuits d'injection de carburant. Ce conduit renvoie le carburant excédentaire au réservoir de carburant sans autre utilisation ni traitement particulier pour le refroidir.

La solution envisagée consiste à permettre les échanges thermiques entre ce conduit d'acheminement de carburant et le conduit d'urée liquide 17.

Un conduit d'acheminement 18 de gaz d'échappements reliant une unité de post-traitement du groupe motopropulseur à la sortie des gaz d'échappement peut également être adapté pour transmettre de la chaleur au conduit d'urée liquide 3.

Avantageusement, en choisissant d'adapter l'un de ces conduits, c'est-à-dire le conduit d'acheminement de carburant excédentaire ou le conduit d'acheminement des gaz d'échappement pour diffuser leur chaleur vers le conduit d'urée liquide, le carburant excédentaire acheminé vers le réservoir de carburant se refroidit.

En d'autres termes, l'agent réducteur est ici chauffé soit à partir du carburant excédentaire réinjecté dans le réservoir de carburant, soit à partir des effluents gazeux circulant dans la ligne d'échappement, par exemple en aval du dispositif de post traitement 11. Le chauffage s'effectue dès lors sans résistance électrique, ce qui permet d'économiser le nécessaire diagnostique du circuit électrique associé ainsi que d'éviter les défaillances d'un tel système.

Avantageusement, cette solution permet de réchauffer plus rapidement le conduit d'urée pour permettre une injection plus tôt. L'algorithme décisionnel et de calcul de la quantité et de l'instant d'injection d'urée peut être conservé et estimer ou mesurer la température du conduit d'acheminement d'urée.

Réduire le nombre de résistances permet également d'économiser avantageusement la consommation électrique globale du véhicule et de réduire les émissions en C0₂.

De plus, l'adaptation de la conduite de carburant excédentaire ne nécessite pas de déplacement important puisqu'elle se trouve déjà à proximité du conduit d'urée liquide.

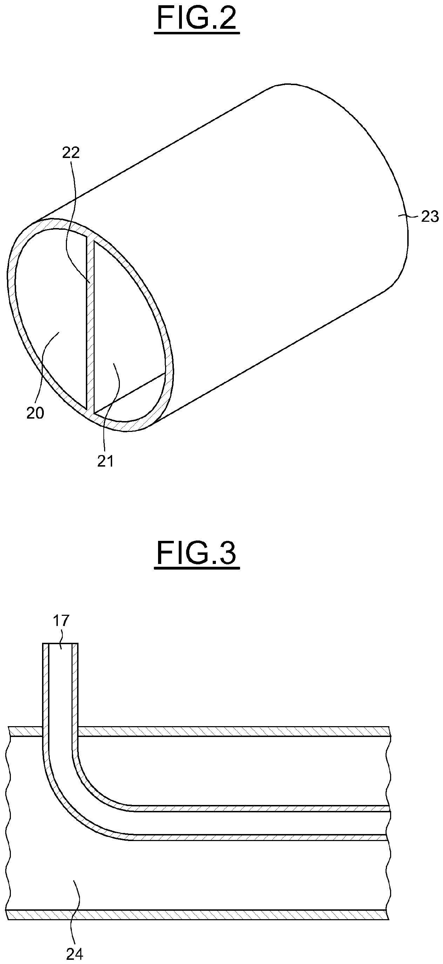

Comme on le voit sur la figure 2, le conduit d'urée liquide 1 et le conduit d'acheminement de carburant excédentaire peuvent être réalisés sous la forme de deux conduits respectivement 20 et 21 accolés par une surface de contact 22 et formant une canalisation commune 23.

Selon un autre mode de réalisation ne faisant pas parti de l'invention, comme on le voit sur la figure 3, le conduit d'urée liquide 17 est partiellement disposé à l'intérieur du conduit d'acheminement du carburant 24, dans lequel une ouverture étanche est pratiquée pour permettre l'introduction du conduit d'urée liquide.

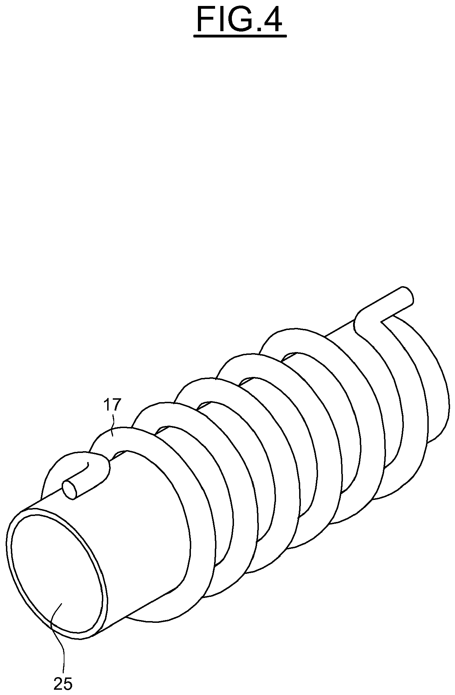

La figure 4 illustre, de manière non limitative, un exemple selon l'invention de conduit d'urée liquide 17 s'enroulant en « serpentin » autour d'un conduit 25 d'acheminement de carburant excédentaire. Cet arrangement favorise notamment les échanges thermiques entre les fluides des deux conduits.

On notera enfin que l'invention n'est pas limitée au mode de réalisation décrit.

Il est également possible, en variante, d'utiliser tout autre type de source de chaleur disponible au sein du groupe motopropulseur.

On peut ainsi utiliser une source de chaleur constituée par les circuits de distribution d'huile 5, ou encore utiliser la chaleur issue du circuit de refroidissement du moteur, ou encore utiliser de l'air chaud soufflé par un groupe moto-ventilateur du groupe motopropulseur.

## Revendications

1. Système de chauffage d'un agent réducteur d'un dispositif de dépollution par réduction catalytique sélective pour un véhicule à moteur diesel, comprenant au moins une source de chaleur, un réservoir (13) d'agent réducteur, et au moins un conduit (17) d'acheminement de l'agent réducteur reliant ledit réservoir à un injecteur d'agent réducteur, ladite au moins une source de chaleur étant adaptée pour chauffer ledit agent réducteur, **caractérisé en ce que** la source de chaleur comprend un circuit de retour de carburant comprenant un conduit d'acheminement du carburant (21) permettant la récupération du carburant excédentaire ou des fuites d'au moins un circuit d'injection du moteur diesel, et **en ce que** ledit conduit (17) d'acheminement de l'agent réducteur est disposé au moins partiellement autour à l'extérieur dudit conduit (25) d'acheminement du carburant, en s'enroulant en spirale.

2. Système de chauffage selon la revendication 1, dans lequel l'agent réducteur est une solution aqueuse comprenant de l'urée adaptée pour réduire les émissions d'oxydes d'azote.

3. Système de chauffage selon l'une quelconque des revendications précédentes, dans lequel au moins une source de chaleur est une ligne d'échappement (18).

4. Système de chauffage selon l'une quelconque des revendications précédentes, dans lequel au moins une source de chaleur (1) est une résistance électrique (16).

5. Système de chauffage selon la revendication 4, dans lequel ladite au moins une résistance électrique est disposée le long dudit conduit d'acheminement de l'agent réducteur ou dans ledit réservoir d'agent réducteur.

6. Système de chauffage selon l'une quelconque des revendications précédentes, dans lequel au moins une source de chaleur est un circuit de refroidissement de moteur.

7. Système de chauffage selon l'une quelconque des revendications précédentes, dans lequel au moins une source de chaleur est un circuit d'huile de moteur.

8. Système de chauffage selon l'une quelconque des revendications précédentes, dans lequel au moins une source de chaleur est issue de l'air chaud soufflé par un groupe moto ventilateur.

## Patentansprüche

1. Heizsystem für ein Reduktionsmittel einer Vorrichtung zur Reinigung durch selektive katalytische Reduktion für ein Fahrzeug mit Dieselmotor, beinhaltend mindestens eine Wärmequelle, einen Reduktionsmittelbehälter (13) und mindestens einen Transportkanal (17) für das Reduktionsmittel, der den Behälter mit einer Reduktionsmitteleinspritzeinheit verbindet, wobei die mindestens eine Wärmequelle dazu ausgelegt ist, das Reduktionsmittel zu erwärmen,
**dadurch gekennzeichnet, dass** die Wärmequelle einen Kraftstoffrückführkreislauf beinhaltet, der einen Transportkanal für den Kraftstoff (21) beinhaltet, der die Rückgewinnung des überschüssigen Kraftstoffs oder der Lecks mindestens eines Einspritzkreislaufs des Dieselmotors gestattet, und dass der Transportkanal (17) für das Reduktionsmittel zumindest teilweise um die Außenseite des Transportkanals (25) für den Kraftstoff herum angeordnet ist, wobei er spiralförmig gewunden ist.

2. Heizsystem nach Anspruch 1, wobei das Reduktionsmittel eine wässrige Lösung ist, die Harnstoff beinhaltet, die dazu ausgelegt ist, die Stickstoffoxidemissionen zu reduzieren.

3. Heizsystem nach einem der vorhergehenden Ansprüche, wobei mindestens eine Wärmequelle eine Abgasleitung (18) ist.

4. Heizsystem nach einem der vorhergehenden Ansprüche, wobei mindestens eine Wärmequelle (1) ein elektrischer Widerstand (16) ist.

5. Heizsystem nach Anspruch 4, wobei der mindestens eine elektrische Widerstand entlang dem Transportkanal für das Reduktionsmittel oder in dem Reduktionsmittelbehälter angeordnet ist.

6. Heizsystem nach einem der vorhergehenden Ansprüche, wobei mindestens eine Wärmequelle ein Motorkühlkreislauf ist.

7. Heizsystem nach einem der vorhergehenden Ansprüche, wobei mindestens eine Wärmequelle ein Motorölkreislauf ist.

8. Heizsystem nach einem der vorhergehenden Ansprüche, wobei mindestens eine Wärmequelle aus der warmen Luft, die durch eine Motorventilatorgruppe ausgeblasen wird, abgeleitet ist.

## Claims

1. System for heating a reducing agent of a pollution-control device using selective catalytic reduction for a diesel engine vehicle, comprising at least one heat source, a tank (13) of reducing agent, and at least one reducing-agent-conveying pipe (17) connecting the said tank to a reducing-agent injector, the said at least one heat source being designed to heat the said reducing agent,
**characterized in that** the heat source comprises a fuel return circuit comprising a fuel-conveying pipe (21) allowing the recovery of the excess fuel or leaks from at least one injection circuit of the diesel engine, and **in that** the said reducing-agent-conveying pipe (17) is arranged at least partially around the outside of the said fuel-conveying pipe (25), wrapped in a spiral.

2. Heating system according to Claim 1, in which the reducing agent is an aqueous solution containing urea designed to reduce the emissions of nitrogen oxides.

3. Heating system according to either one of the preceding claims, in which at least one heat source is an exhaust line (18).

4. Heating system according to any one of the preceding claims, in which at least one heat source (1) is an electric resistor (16).

5. Heating system according to Claim 4, in which the said at least one electric resistor is positioned along the said reducing-agent-conveying pipe or in the said reducing-agent tank.

6. Heating system according to any one of the preceding claims, in which at least one heat source is an engine cooling circuit.

7. Heating system according to any one of the preceding claims, in which at least one heat source is an engine oil circuit.

8. Heating system according to any one of the preceding claims, in which at least one heat source comes from the hot air blown by a motorized fan unit.
